# FASCICULE DE BREVET EUROPEEN

(11) **EP 2 709 832 B1**
(45) Date de publication et mention de la délivrance du brevet: **24.10.2018**
(21) Numéro de dépôt: 12728641.7
(22) Date de dépôt: 15.05.2012
(51) Int. Cl.: B29C 70/38, B65H 57/12

(54) **MACHINE D'APPLICATION DE FIBRES AVEC TUBES FLEXIBLES D'ACHEMINEMENT DE FIBRES MUNIS DE LAMES FLEXIBLES**
FASERAPPLIKATIONSMASCHINE MIT FLEXIBLEN FASERFÖRDERROHREN MIT FLEXIBLEN PLATTEN
FIBRE APPLICATION MACHINE INCLUDING FLEXIBLE FIBRE-CONVEYING TUBES PROVIDED WITH FLEXIBLE PLATES

(30) Priorité: 20.05.2011 FR 1154449
(43) Date de publication de la demande: 26.03.2014
(73) Titulaire: Coriolis Group, 56530 Quéven (FR)
(72) Inventeur: CAFFIAU, Johann, F-56700 Hennebont (FR); LE BORGNE, Olivier, F-56100 Lorient (FR); HARDY, Yvan, 56270 Ploemeur (FR); HAMLYN, Alexander, F-56270 Ploemeur (FR)
(86) Numéro de dépôt international: PCT/FR2012/000195
(87) Numéro de publication internationale: WO 2012/160270

(56) Documents cités:
- WO-A1-2009/081805
- FR-A1- 2 912 953

## Description

La présente invention concerne une machine d'application de fibres pour la réalisation de pièces en matériaux composites, et plus particulièrement des moyens d'acheminement de fibres particuliers d'une telle machine pour acheminer les fibres entre des moyens de stockage de fibres et la tête d'application.

Il est connu des machines d'application de fibres, appelées couramment machines de placement de fibres, pour l'application au contact sur un outillage de drapage, tel qu'un moule mâle ou femelle, d'une bande large formée de plusieurs fibres plates continues, de type rubans, sèches ou imprégnées de résine thermodurcissable ou thermoplastique, notamment des fibres de carbone, constituées d'une multitude de fils ou filaments de carbone.

Ces machines comprennent un système de déplacement d'une tête d'application de fibres, ladite tête comportant un rouleau d'application destiné à venir en contact contre le moule pour appliquer la bande et des moyens de guidage des fibres sur ledit rouleau d'application, des moyens de stockage de fibres, et des moyens d'acheminement des fibres desdits moyens de stockage vers la tête d'application.

Dans le document brevet WO 2008122709, il a été proposé d'utiliser des moyens d'acheminement comprenant des tubes flexibles reliant les moyens de stockage à la tête d'application, chaque tube flexible étant apte à recevoir une fibre dans son passage interne. Les tubes flexibles sont fixés par leurs extrémités à la tête d'application et aux moyens de stockage respectivement par des moyens de fixation amont et aval, et présentent une longueur et une flexibilité suffisantes pour ne pas limiter les mouvements du système de déplacement de la tête. Chaque tube flexible est muni d'au moins une lame flexible longitudinale de section transversale rectangulaire, ladite lame flexible étant disposée sensiblement parallèlement au plan de transport de la fibre reçue dans le passage interne du tube flexible.

De tels tubes flexibles forment des moyens d'acheminement simples de conception, d'encombrement et de coûts réduits, permettant d'obtenir des vitesses de défilement élevées, de déporter les moyens de stockage du système de déplacement, de supprimer les systèmes motorisés de récupération de mou pour les bobines de fibres, d'isoler les fibres de l'extérieur, et de simplifier le système de déplacement de la tête d'application, notamment d'utiliser un système de déplacement tel qu'un bras poly-articulé de type robot six axes.

La lame flexible associée à chaque tube limite ou interdit la flexion transversale du tube dans le plan de la lame, ce qui permet de supprimer, ou tout au moins limiter, les risques de retournement de la fibre disposée dans le passage interne du tube flexible parallèlement à la lame, en particulier lors de certains déplacements du robot, en raison de flexions trop importantes des tubes flexibles et/ou de frottements trop importants des fibres dans les tubes flexibles. Le tube flexible peut effectuer des mouvements de flexion dans une direction perpendiculaire au plan de la lame et des mouvements de torsion pour permettre le déplacement de la tête de placement de fibres dans toutes les directions.

L'assemblage de la lame et du tube flexible est effectué au moyen d'une bande adhésive, la bande adhésive étant enroulée de façon hélicoïdale autour du tube et de la lame pour plaquer cette dernière contre le tube flexible. L'ensemble est recouvert par une gaine de protection.

Cet assemblage s'avère toutefois long et fastidieux à réaliser.

Le but de la présente invention est de proposer une machine munie de moyens d'acheminement garantissant un bon acheminement des fibres, et qui soient simples à réaliser.

A cet effet, la présente invention propose une machine d'application de fibres selon la revendication 1, comprenant
- une tête d'application de fibres, comportant un rouleau d'application et des moyens de guidage des fibres sur ledit rouleau d'application,
- de préférence, un système de déplacement pour déplacer la tête d'application de fibres,
- des moyens de stockage de fibres, et
- des moyens d'acheminement des fibres desdits moyens de stockage vers la tête d'application, lesdits moyens d'acheminement comprenant des premiers tubes flexibles, dits d'acheminement, reliant les moyens de stockage à la tête d'application, chaque premier tube flexible étant apte à recevoir une fibre dans son passage interne, les premiers tubes flexibles étant montés en extrémité à la tête d'application et aux moyens de stockage respectivement par des systèmes de fixation, chaque tube flexible est muni d'au moins une lame flexible longitudinale de section transversale rectangulaire, ladite lame flexible étant disposée sensiblement parallèlement au plan de transport de la fibre reçue dans le passage interne du tube flexible,
caractérisée en ce que chaque premier tube flexible et sa lame flexible associée sont placés dans un second tube flexible, dit de maintien ou de guidage, de sorte que ledit second tube flexible maintient ladite lame flexible sensiblement contre le premier tube flexible, tout en autorisant un déplacement longitudinal relatif de la lame flexible par rapport au premier tube flexible.

Selon l'invention, l'assemblage du premier tube flexible et d'une lame distincte est réalisé par un second tube flexible, ce système d'assemblage maintient la lame sensiblement au contact du tube flexible tout en autorisant un déplacement longitudinal relatif de la lame flexible par rapport au premier tube. Un tel assemblage s'avère simple à réaliser. Le second tube flexible de maintien assure une liaison de type glissière entre le premier tube flexible d'acheminement et la lame flexible.

En outre, un tel assemblage qui autorise un déplacement ou glissement longitudinal entre le premier tube flexible et le second tube flexible, facilite les flexions longitudinales du tube flexible dans une direction perpendiculaire au plan de la lame flexible, dans les deux sens opposés, le tube flexible présentant sensiblement la même raideur dans les deux dits sens opposés, bien que la lame flexible soit placée d'un côté du tube. Des flexions longitudinales peuvent être effectuées dans les deux sens opposés, sans détérioration de l'assemblage entre le tube flexible et la lame flexible.

Selon l'invention, la lame flexible s'étend sur sensiblement toute la longueur du premier tube flexible, le premier tube flexible et la lame flexible étant assemblés par leurs portions d'extrémité auxdits systèmes de fixation de façon à permettre un déplacement longitudinal relatif de la lame flexible par rapport au premier tube flexible.

Selon l'invention, l'un des éléments parmi la lame flexible et le premier tube flexible est assemblé de manière fixe par ses portions d'extrémités aux systèmes de fixation, le second élément étant assemblé avec une liberté de déplacement longitudinal par au moins une de ses portions d'extrémité à l'un des systèmes de fixation.

Selon un mode de réalisation, ledit second élément est assemblé par une de ses portions d'extrémité à un système de fixation avec une liberté de déplacement longitudinal, et est assemblé sans liberté de déplacement par son autre portion d'extrémité à l'autre système de fixation.

Selon un mode de réalisation, la lame flexible est assemblée sans liberté de déplacement par ses portions d'extrémité aux systèmes de fixation.

Selon un mode de réalisation, le premier tube flexible est assemblé sans liberté de déplacement par une extrémité dite amont au système de fixation dit amont, assemblé aux moyens de stockage, et est assemblé avec une liberté de déplacement longitudinal par sa portion d'extrémité aval au système de fixation dit aval assemblé à la tête d'application.

Selon un mode de réalisation, le premier tube flexible présente une portion longitudinale de surface extérieure sensiblement plane, le long de laquelle la lame flexible est maintenue par le second tube flexible.

Selon un mode de réalisation, le premier tube flexible a une section transversale sensiblement rectangulaire, la lame flexible étant maintenue par le second tube flexible le long d'un des deux côtés de grande dimension du premier tube flexible.

Selon un mode de réalisation, le second tube flexible a une section transversale sensiblement rectangulaire.

Selon un mode de réalisation, ladite lame flexible est métallique, et/ou le premier tube flexible est en matériau plastique, de préférence de polyéthylène haute densité, mieux encore de polyéthylène haute densité antistatique, et de préférence le second tube flexible est en matériau plastique.

Selon un mode de réalisation, le second tube flexible est annelé. Un tel second tube annelé présente une grande flexibilité dans toutes les directions, et ne limite ainsi pas ou peu la flexion longitudinale du premier tube dans la direction perpendiculaire au plan de la lame flexible.

Selon un mode de réalisation, chaque système de fixation comprend un support ou cassette pour chaque premier tube flexible, chaque support présentant un passage principal traversant dans lequel est monté le premier tube flexible par une portion d'extrémité, et un passage secondaire dans lequel est montée la lame flexible par une portion d'extrémité.

Selon un mode de réalisation, chaque système de fixation comprend des moyens de rigidification secondaires agissant contre le premier tube flexible à l'opposé de ladite lame flexible et éventuellement contre la lame flexible pour au moins limiter la flexion longitudinale du premier tube flexible dans une direction perpendiculaire au plan de la lame en sortie desdits systèmes de fixation. Selon un mode de réalisation, les moyens de rigidification secondaires comprennent au moins première lame flexible secondaire, de préférence de section transversale rectangulaire, montée sur le système de fixation, et venant en appui contre le premier tube flexible à l'opposé de la lame flexible. Lesdits moyens de rigidification secondaires peuvent comprendre pour chaque système de fixation, au moins une paire de premières lames flexibles secondaires, de préférence de section transversale rectangulaire, montées sur les systèmes de fixation dont l'une vient en appui contre la lame flexible, et l'autre vient en appui contre le premier tube flexible à l'opposé de la lame flexible. Une paire de deuxièmes lames flexibles secondaires peuvent venir en appui contre les premières lames flexibles secondaires.

Selon un mode de réalisation, les premières lames secondaires des deux systèmes de fixation qui sont en appui contre le premier tube flexible ont des parties d'extrémité libre qui se chevauchent, la partie d'extrémité libre d'une première lame secondaire d'un système de fixation, depuis lequel le premier tube flexible sera inséré pour son montage, étant intercalée entre le premier tube flexible et la partie d'extrémité libre de la première lame secondaire de l'autre système de fixation. Selon un autre mode de réalisation, les premières lames secondaires des systèmes de fixation qui viennent contre le premier tube flexible sont formées d'une seule lame flexible continue, ladite lame étant assemblée avec une liberté de déplacement longitudinal par au moins une de ses portions d'extrémité à l'un des systèmes de fixation.

Les tubes flexibles sont de préférence assemblés en au moins une rangée par leurs portions extrémités à la tête d'application et aux moyens de stockage par les systèmes de fixation, pour recevoir et délivrer des fibres sous forme de nappe, les cassettes étant par exemple assemblées à plat les unes contre les autres sur une plaque support.

Les moyens d'acheminement peuvent comprendre en outre des moyens de fluidisation aptes à fluidiser une fibre lors de son transport dans le passage interne d'un premier tube flexible, lesdits moyens de fluidisation peuvent comprendre des moyens d'injection d'air, par exemple montés sur le système de fixation amont, aptes à injecter de l'air ou tout autre type de gaz, dans le passage interne de chaque tube flexible au niveau de sa portion d'extrémité amont, pour créer un flux d'air dans la direction de transport des fibres. Le flux d'air est de préférence climatisé, à savoir régulé en température et/ou en hygrométrie, et purifié pour éviter toute pollution des fibres. Les moyens de fluidisation peuvent comprendre en outre des moyens de vibration aptes à faire vibrer lesdits tubes flexibles. Avantageusement, lesdits moyens de fluidisation sont montés sur les moyens de fixation amont.

La machine comprend avantageusement un système de déplacement apte à déplacer la tête d'application selon au moins trois directions perpendiculaires les unes aux autres. Ledit système de déplacement comprend avantageusement un robot comprenant un poignet ou bras poly-articulé à l'extrémité duquel est montée ladite tête d'application. Le système de déplacement peut être formé par un bras poly-articulé de type robot standard six axes, disposé au sol ou monté sur axe linéaire ou un portique.

Les moyens de stockage de fibres peuvent comprendre un cantre dans le cas de fibres conditionnées sous forme de bobines et/ou des étagères dans le cas de fibres conditionnées sous forme de pelotes ou dans des cartons. Ces moyens de stockage peuvent être disposés au sol, par exemple dans le cas d'un robot standard fixe, ou être montés sur un élément du système de déplacement, par exemple sur un chariot suiveur coulissant sur l'axe linéaire du robot.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés sur lesquels :
- la figure 1 est une vue schématique de côté d'une machine de placement selon l'invention ;
- la figure 2 est une vue schématique partielle en perspective des moyens d'acheminement illustrant un tube flexible d'acheminement et les systèmes de fixation amont et aval selon l'invention ;
- la figure 3 est une vue schématique en coupe selon le plan III-III de la figure 2 ;
- la figure 4 est une vue schématique partielle en perspective d'un tube flexible d'acheminement ;
- la figure 5 est une vue schématique en coupe transversale d'un tube flexible d'acheminement ;
- la figure 6 est une vue schématique éclatée en perspective de différents éléments constitutifs des moyens d'acheminement ;
- les figures 7 et 8 sont des vues agrandies partielles de la figure 3 respectivement au niveau du système de fixation amont et au niveau du système de fixation aval ;
- la figure 9 est une vue schématique partielle en perspective des moyens d'acheminement selon une variante de réalisation ;
- la figure 10 est une vue en coupe longitudinale des moyens d'acheminement de la figure 9 ;
- les figures 11 et 12 sont des vues schématiques respectivement en perspective partielle et en coupe transversale du tube flexible d'acheminement de la figure 9 ;
- la figure 13 est une vue schématique en coupe longitudinale du second tube flexible pour le maintien de la lame flexible et du tube flexible d'acheminement ; et,
- les figures 14 et 15 sont des vues schématiques partielles éclatée en perspective et en coupe longitudinale de moyens d'acheminement selon une deuxième variante de réalisation.

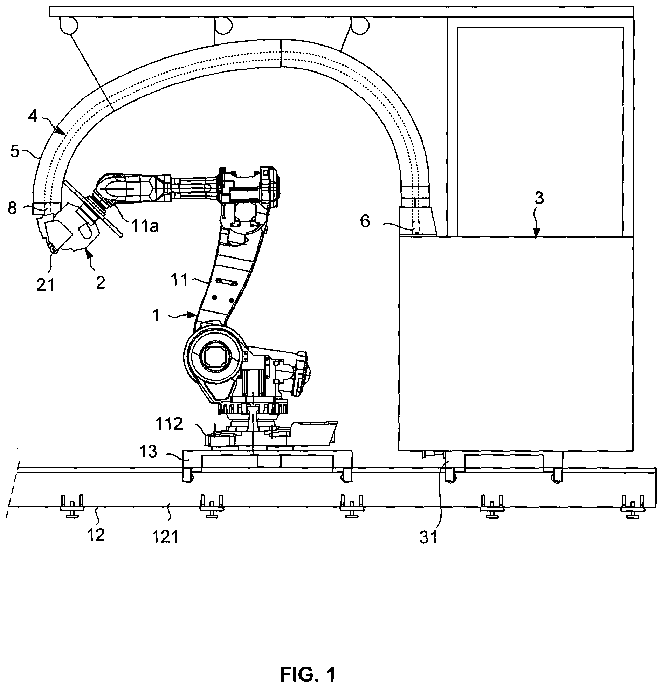

En référence à la figure 1, la machine de placement comprend un système de déplacement 1 formé d'un bras poly-articulé 11, du type robot six axes, connu en soi, monté mobile sur un axe linéaire 12, une tête d'application 2 montée au poignet d'extrémité 11a du bras poly-articulé, des moyens de stockage 3 de fibres, des moyens d'acheminement pour acheminer des fibres depuis lesdits moyens de stockage vers la tête d'application.

Le bras poly-articulé 11 est fixé par son embase 112 sur un chariot 13 monté coulissant sur l'axe linéaire 12, ledit axe linéaire étant constitué de deux rails 121 parallèles fixés au sol. Le chariot est équipé de moyens d'entraînement, par exemple de type galets motorisés, asservis par une unité de commande pour le déplacement de la tête de placement le long de ces rails.

La tête d'application de fibres 2, appelée également tête de placement de fibres, comprend de manière connue, un rouleau d'application 21 apte à venir en contact avec un moule pour appliquer une bande formée de plusieurs fibres, par exemple pré-imprégnées de résine.

La machine est prévue pour l'application de fibres, par exemple de type fibres de carbone F, conditionnées sous forme de bobines. Les moyens de stockage sont formés d'un cantre, schématiquement représentée sous la référence 3, pour recevoir les bobines de fibres. Chaque bobine est montée sur un mandrin du cantre, avantageusement équipé d'un système de freinage automatique asservi en boucle fermée en fonction de la tension de la fibre, tel que décrit dans le document brevet EP 697990. Le cantre est également monté sur un chariot suiveur 31, disposé sur les rails 121 et relié mécaniquement au chariot 13 portant le robot.

La machine comprend une unité de commande (non représentée) pour commander les déplacements du robot selon des séquences programmées, la tête de placement de fibres, notamment les vérins de systèmes de coupe individuelle et de systèmes de réacheminement. Les circuits électriques, pneumatiques et/ou hydrauliques pour la commande de la tête de placement sont disposés dans un tuyau (non représenté) s'étendant de la tête de placement à l'unité de commande, le long du bras du robot.

Les moyens d'acheminement comprennent des premiers tubes flexibles, dits d'acheminement, équipés de lames flexibles de rigidification. Les fibres sont acheminées individuellement dans ces tubes d'acheminement du cantre 3 à la tête de placement de fibres 2.

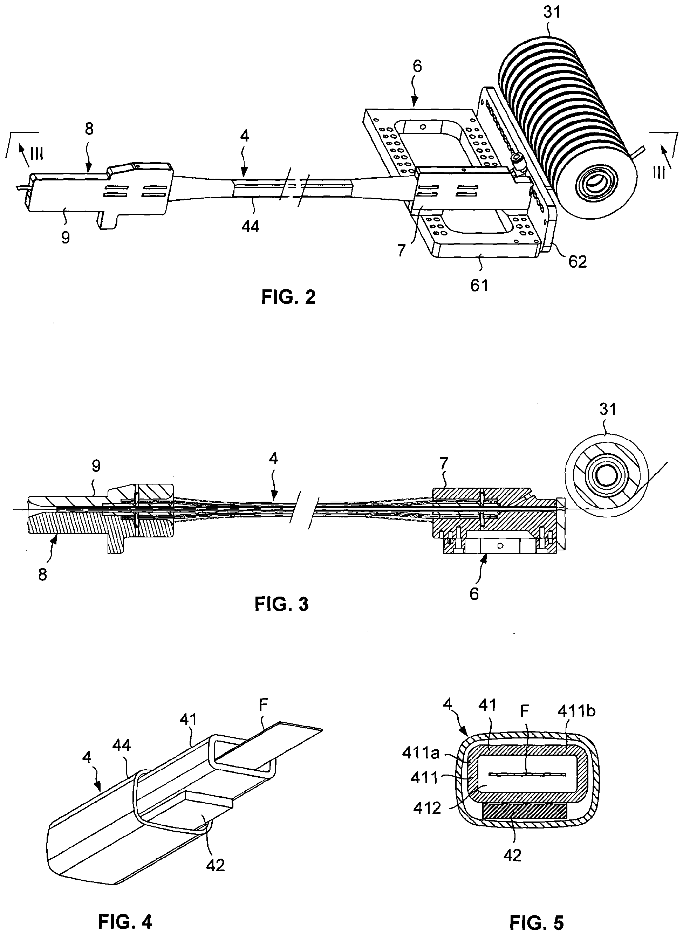

En référence aux figures 4 et 5, chaque tube d'acheminement 41 présente une paroi 411 de section transversale rectangulaire, avec deux petits côtés 411a et deux grands côtés 411b. La paroi 411 présente une surface interne et une surface externe sensiblement plane. Chaque tube d'acheminement est équipé extérieurement sur sensiblement toute sa longueur d'une lame métallique 42 flexible, appelée également clinquant. La lame métallique et le tube d'acheminement sont placés dans un second tube flexible 44, dit de maintien, de section sensiblement rectangulaire de manière à maintenir la lame sensiblement parallèle à la surface extérieure d'un grand côté 411b du tube d'acheminement, et sensiblement en contact avec ladite surface, tout en autorisant un déplacement longitudinal relatif de la lame par rapport au tube d'acheminement. La lame a une largeur inférieure ou égale à celle d'un grand côté, de préférence inférieure. Le tube d'acheminement équipé de sa lame et placé dans le tube de maintien est désigné par la référence 4. Chaque tube d'acheminement est destiné à recevoir une fibre plate F dans son passage interne 412 de section rectangulaire, sensiblement parallèlement à ses grands côtés, et donc parallèlement à la lame métallique.

La lame métallique interdit toute flexion transversale du tube flexible dans le plan de la lame, mais autorise des flexions longitudinales du tube flexible dans une direction perpendiculaire au plan de la lame ainsi que des torsions du tube flexible. Lors des déplacements du robot pour les opérations de placement de fibres, les tubes flexibles vont se déformer par flexion perpendiculairement au plan de la lame et/ou torsion, de sorte que la fibre F reste bien à plat parallèlement à la lame métallique.

Les tubes sont rassemblés en un faisceau, représenté schématiquement sous les références 4A sur la figure 1, et sont placés dans le passage interne d'une gaine 5 flexible, telle que décrite dans le document brevet WO2010/049424. Cette gaine est refroidie par des moyens de refroidissement, placés dans l'armoire du cantre, aptes à injecter un gaz froid dans ledit passage interne de ladite gaine pour refroidir et maintenir les fibres à une température basse, à laquelle les fibres restent peu collantes. La gaine, assemblée par son extrémité amont et son extrémité aval, respectivement au cantre et à la tête d'application, présente une longueur et une flexibilité suffisantes pour ne pas limiter les mouvements du bras poly-articulé. Pour éviter que la gaine ne gêne les déplacements de la tête et/ou ne vienne contre le moule, la machine comprend un système de récupération de mou, agissant sur ladite gaine de sorte que la partie aval de la gaine reste sensiblement tendue, en particulier au niveau du poignet, quelque soit la position de la tête. Ledit système de récupération de mou comprend au moins un enrouleur de câble automatique, par exemple de type à ressort spiral, monté sur une traverse support fixée au cantre, et dont l'extrémité libre du câble est fixée à la gaine.

Les tubes d'acheminement sont fixés en extrémité au cantre 3 et à la tête respectivement par des systèmes de fixation amont et aval représentés schématiquement sous les références 6 et 8. Pour autoriser un déplacement longitudinal entre chaque tube d'acheminement et sa lame, chaque tube d'acheminement est assemblé de manière fixe, à savoir fixé sans liberté de déplacement, par sa portion d'extrémité au système de fixation amont 6, et assemblé de manière mobile en translation longitudinale, à savoir fixé avec une liberté de déplacement longitudinal, au système de fixation aval 8, tandis que sa lame associée est assemblée de manière fixe par ses portions d'extrémité aux systèmes de fixation amont et aval.

En référence en particulier aux figures 2, 3 et 7, le système de fixation 6 amont comprend pour chaque tube d'acheminement un support amont 7 sous la forme d'une plaque parallélépipédique, appelé également cassette amont, ayant deux faces principales 71 opposées, un bord amont 72a, un bord aval 72b, un bord supérieur 72c et un bord inférieur 72d. La cassette présente un passage principal 73 longitudinal, de section transversale rectangulaire, débouchant sur les bords amont et aval 72a, 72b, dans lequel un tube d'acheminement est monté par sa portion d'extrémité amont 41a. Les cassettes sont montées de manière fixe par leur bord inférieur 72d sur une plaque support 61, sous la forme d'une rangée, les cassettes étant disposées à plat les unes contre les autres par leurs faces principales 71, la plaque support étant montée sur le cantre.

La section du passage principal 73 est définie de sorte que le tube d'acheminement soit bloqué en rotation dans ledit passage principal. Pour son blocage longitudinal dans le passage principal, la portion d'extrémité amont 41a du tube présente une collerette 413 venant en appui contre le bord amont 72a de la cassette, la collerette venant par exemple se loger dans un renfoncement dudit bord amont, et une plaque 62 à oeillets fixée à la plaque support 61, vient en appui contre les bords amont des cassettes 7. La plaque à oeillet est munie d'oeillets, par exemple en téflon, pour faciliter l'entrée des fibres dans les tubes d'acheminement.

La cassette est munie d'un premier passage secondaire 74a longitudinal, parallèle au passage principal, débouchant sur le bord aval 72b de la cassette, et dans lequel est montée la portion d'extrémité amont 42a de la lame flexible, parallèlement aux grands côtés du tube d'acheminement. La lame flexible est bloquée en translation longitudinale dans ce premier passage secondaire au moyen d'une vis 75a, vissée depuis le bord inférieur 72d de la cassette et passant dans un trou 421a de la portion d'extrémité amont de la lame.

Pour augmenter la raideur de la lame 42 flexible en sortie des cassettes, et ainsi diminuer la flexion longitudinale du tube flexible dans la direction perpendiculaire au plan de la lame en sortie des cassettes, des lames flexibles secondaires sont montées sur la cassette de part et d'autre du tube d'acheminement, et viennent en appui d'un côté contre le tube d'acheminement, et de l'autre côté contre la lame flexible. Deux lames flexibles secondaires disposées à plat l'une contre l'autre sont montées dans le premier passage secondaire recevant la lame 42 flexible : une première lame secondaire 76a est disposée à plat contre la face principale de la lame flexible qui est opposée au tube d'acheminement, et une deuxième lame secondaire 76b, plus courte que la première lame secondaire, est disposée à plat contre la première lame secondaire. Les lames secondaires 76a, 76b, de section transversale sensiblement identique à celle de la lame flexible, présentent des trous 761a, 761b dans lequel passe la vis 75a précitée pour leur blocage dans le premier passage secondaire 74a. Une ou plusieurs vis de pression (non représentée) vissées depuis le bord inférieur de la cassette peuvent en outre être prévues pour venir en appui contre la deuxième lame secondaire 76b pour compléter le blocage des trois lames 42, 76a, 76b dans le passage secondaire 74a.

De manière analogue, deux autres lames secondaires, une première lame secondaire 77a et une seconde lame secondaire 77b, sont montées dans un deuxième passage secondaire 74b disposé parallèlement au passage principal, du côté du tube d'acheminement opposé à la lame flexible 42. Le blocage des lames secondaires 77a, 77b dans le deuxième passage secondaire est réalisé au moyen d'une vis 75b vissée depuis le bord supérieur et passant dans des trous 771a, 771b des lames secondaires, ainsi qu'éventuellement par une ou plusieurs vis de pression venant en appui contre la seconde lame secondaire 77b. En sortie de cassette, la première lame secondaire 77a vient à plat contre le grand côté du tube d'acheminement qui est opposé à la lame flexible 42, la deuxième lame secondaire plus courte que la première lame secondaire, étant disposée à plat contre la première lame secondaire.

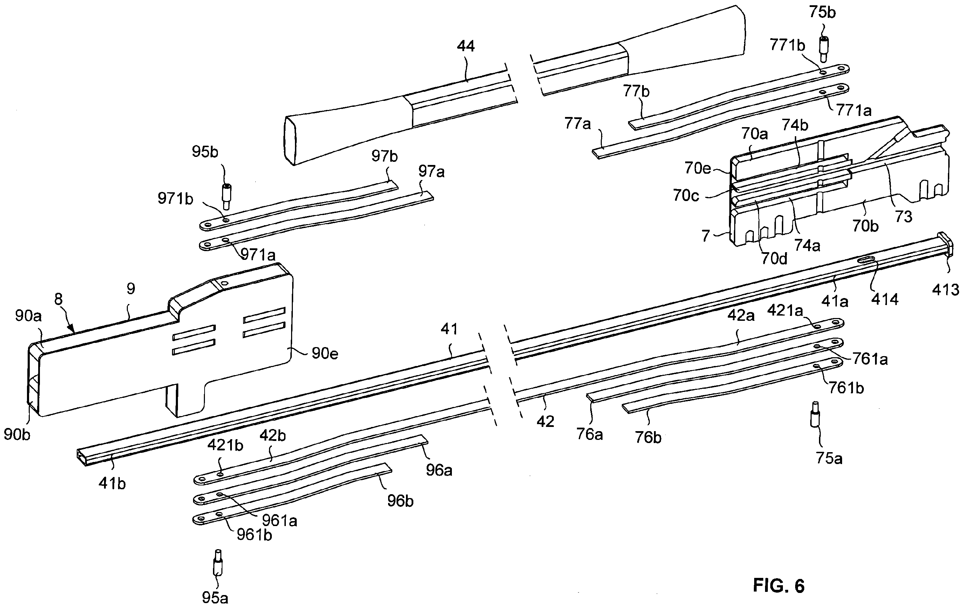

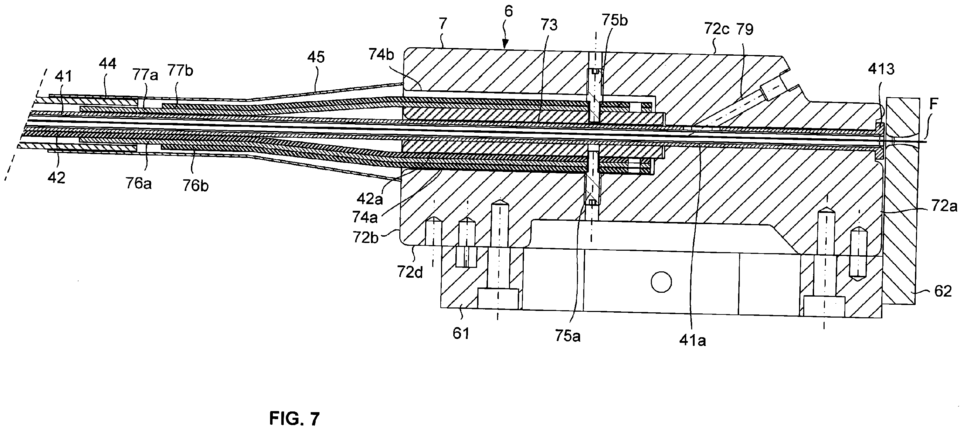

A titre d'exemple, en référence aux figures 6 et 7, la cassette est réalisée au moyen d'une plaque supérieure 70a, d'une plaque inférieure 70b, et de deux plaquettes 70c, 70d montées entre deux flasques 70e de manière à former entre elles le passage principal 73 et les deux passages secondaires 74a, 74b. En référence à la figure 6, sur laquelle l'une des flasques a été retirée, une portion amont du passage principal 73 est formée entre les plaques supérieure et inférieure 70a, 70b, sa portion aval étant définie entre les deux plaquettes 70c, 70d. Un passage secondaire 74a est défini entre la plaque inférieure 70b et une plaquette 70d, l'autre passage secondaire 74b étant défini entre la plaque supérieure 70b et l'autre plaquette 70c. Les plaquettes sont munies de trous taraudés pour le vissage des vis 75a et 75b pour le blocage des lames.

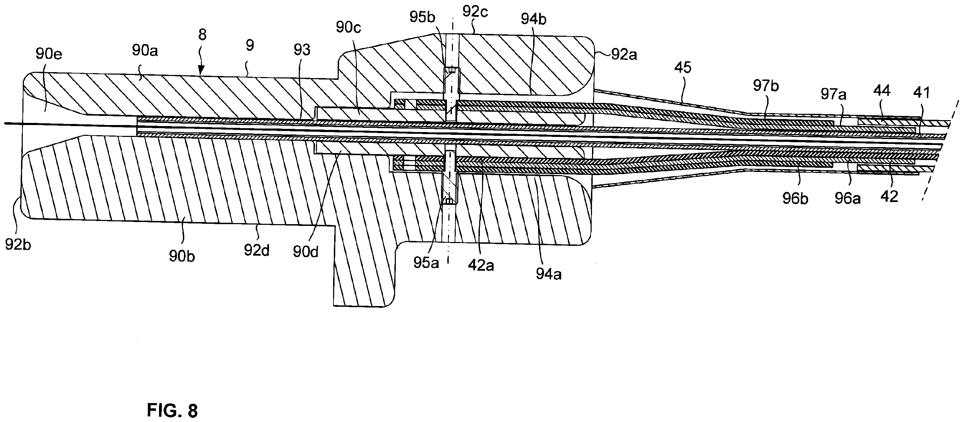

Du côté de la tête de placement, le système de fixation 8 amont comprend pour chaque tube d'acheminement un support aval 9, appelé également cassette aval. En référence en particulier aux figures 6 et 8, chaque cassette aval, sous la forme d'une plaque parallélépipédique, présente deux faces principales 91 opposées, un bord amont 92a, un bord aval 92b, un bord supérieur 92c et un bord inférieur 92d. La cassette aval présente un passage principal 93 longitudinal, de section transversale rectangulaire, débouchant sur les bords amont et aval 92a, 92b, dans lequel un tube d'acheminement est monté par sa portion d'extrémité aval 41b. Les cassettes aval sont montées de manière fixe par leur bord inférieur 92d sur une structure support de la tête de placement de fibre, en formant une rangée, les cassettes aval étant disposées à plat les unes contre les autres par leurs faces principales 91.

La portion d'extrémité aval 41b du tube est montée coulissante dans le passage principal 93. La section du passage principal 93 permet de bloquer en rotation le tube d'acheminement dans ledit passage principal, la portion d'extrémité aval du tube pouvant librement se déplacer longitudinalement dans ce passage principal.

La cassette est munie d'un premier passage secondaire 94a longitudinal, parallèle au passage principal, débouchant sur le bord amont 92a de la cassette, et dans lequel est montée la portion d'extrémité aval 42b de la lame flexible, parallèlement aux grands côtés du tube d'acheminement. La lame flexible est bloquée en translation longitudinale dans ce premier passage secondaire au moyen d'une vis 95a, vissée depuis le bord inférieur 92d de la cassette et passant dans un trou 421b de la portion d'extrémité amont de la lame.

Deux lames flexibles secondaires disposées à plat l'une contre l'autre sont montées dans le premier passage secondaire 94a recevant la lame 42 flexible : une première lame secondaire 96a est disposée à plat contre la face principale de la lame flexible qui est opposée au tube d'acheminement, et une deuxième lame secondaire 96b, plus courte que la première lame secondaire, est disposée à plat contre la première lame secondaire. Les lames secondaires, de section transversale sensiblement identique à celle de la lame flexible, présentent des trous 961a, 961b dans lequel passe la vis 95a précitée pour leur blocage dans le premier passage secondaire 94a. Une ou plusieurs vis de pression vissées depuis le bord inférieur de la cassette peuvent venir en outre en appui contre la deuxième lame secondaire 96b pour compléter le blocage des trois lames 42, 96a, 96b dans le passage secondaire 94a. De manière analogue, deux autres lames secondaires, une première lame secondaire 97a et une seconde lame secondaire 97b, sont montées dans un deuxième passage secondaire 94b disposé parallèlement au passage principal, du côté du tube d'acheminement opposé à la lame flexible 42. Le blocage des lames secondaires 97a, 97b dans le deuxième passage est réalisé au moyen d'une vis 95b vissée depuis le bord supérieur et passant dans des trous 971a, 971b des lames secondaires, ainsi qu'éventuellement par une ou plusieurs vis de pression venant en appui contre la seconde lame secondaire 97b. En sortie de cassette, la première lame secondaire 97a vient à plat contre le grand côté du tube d'acheminement qui est opposé à la lame flexible 42, la deuxième lame secondaire plus courte que la première lame secondaire, étant disposée à plat contre la première lame secondaire.

En extrémité, le tube de maintien 44 est emmanché sur les premières lames secondaires 76a, 77a, 96a, 97a et s'interrompt avant les extrémités des secondes lames secondaires. Des manchons 45 sont emmanchés, et par exemple thermo-rétractés, sur les extrémités du tube de maintien et sur les secondes lames secondaires 76b, 77b, 96b, 97b pour bloquer longitudinalement le tube de maintien et maintenir les secondes lames secondaires contre les premières lames secondaires.

La cassette aval est réalisée également au moyen d'une plaque supérieure 90a, une plaque inférieure 90b, et deux plaquettes 90c, 90d montées entre deux flasques 90e pour former entre elles le passage principal 93 et les deux passages secondaires 94a, 94b. En référence à la figure 7, sur laquelle l'une des flasques a été retirée, une portion amont du passage principal est formée entre les plaques supérieure et inférieure 90a, 90b, sa portion aval étant définie entre les deux plaquettes 90c, 90d, un passage secondaire étant défini entre la plaque inférieure 90b et une plaquette 90d, l'autre passage secondaire étant défini entre la plaque supérieure 90a et l'autre plaquette 90c. Les plaquettes sont munies de trous taraudés pour le vissage des vis 95a et 95b pour le blocage des lames.

A titre d'exemple, pour acheminer des fibres de 6,35 mm de large, les tubes d'acheminement ont une section rectangulaire intérieure de 8x2 mm, avec une épaisseur de paroi de 1 mm, soit une section extérieure de 10x4 mm. Les tubes flexibles sont réalisés en un matériau polymère souple adapté pour le transport des fibres, qui ne casse pas les fibres, ne charge pas les fibres en électricité statique, engendre peu de frottement, résiste à l'usure et possède une bonne tenue en fatigue et en flexions répétées. Les tubes d'acheminement flexibles sont par exemple réalisés en un matériau polymère, tel qu'un polyéthylène haute densité (PEHD) naturel, comprenant un adjuvant antistatique. En l'absence de lame métallique, ces tubes d'acheminement peuvent fléchir transversalement. La lame métallique a une largeur d'environ 5mm, et une épaisseur de l'ordre de 0,5 mm. Le tube de maintien a par exemple une section rectangulaire intérieure de 7x11 mm, avec une épaisseur de paroi de 0,5 mm, soit une section extérieure de 10x14 mm. Les tubes de maintien flexibles sont réalisés en un matériau polymère, tel qu'un polyuréthane ou un polyamide.

Le tube d'acheminement peut par exemple coulisser dans le passage principal de la cassette aval sur un jeu d'environ 20 mm.

Dans le mode de réalisation illustré, le système de fixation amont permet la fixation d'une rangée de seize tubes d'acheminement pour recevoir les fibres d'une nappe de seize fibres sortant du cantre. Le système de fixation est monté par sa plaque support 61 sur le cantre, de sorte que les extrémités des tubes d'acheminement soient disposées en vis-à-vis de poulies de sortie 31 du cantre. Le système de fixation aval comprend une rangée de seize cassettes aval pour la fixation des tubes d'acheminement

Pour améliorer le glissement des fibres dans les tubes, et ainsi garantir un bon acheminement, le système de fixation aval est équipé de moyens de fluidisation pour fluidiser les fibres lors de leur transport dans les tubes. Chaque cassette comprend un canal 79 débouchant dans le passage principal 73, en amont des blocs par exemple en amont des lames. La partie d'extrémité du tube d'acheminement est munie d'une ouverture 414 disposée en vis-à-vis du canal lorsque le tube d'acheminement est monté fixe sur la cassette amont, de sorte que chaque passage interne 412 du tube débouche sur le canal. Les canaux des cassettes sont alimentés individuellement en air comprimé climatisé par des conduites reliées à une source d'air comprimé (non représentée), et chaque canal est orienté de manière à former un flux d'air d'amont en aval dans le passage interne du tube. Dans le cas du transport de fibres pré-imprégnées dont l'aspect collant diminue avec la température, de l'air froid et sec sera avantageusement injecté dans les tubes d'acheminement. Pour compléter ce flux d'air, un système vibreur, connu en soi, peut être monté sur la plaque support pour faire vibrer l'ensemble des tubes d'acheminement lors du transport des fibres. Le système de fixation amont est alors assemblé via sa plaque support au cantre par des liaisons souples de type silentbloc pour éviter la transmission de vibrations au cantre. Les cassettes aval, qui ne comprennent pas de canaux d'injection d'air ni de système vibreur, sont toutefois assemblées à la tête de placement de fibres par des liaisons souples.

Dans le cas d'une tête de placement prévue pour recevoir deux nappes de fibres, les tubes d'acheminement seront bien entendu assemblés en extrémité en deux rangées, par exemple au moyen de deux systèmes de fixation superposés.

En fonction de la longueur des tubes d'acheminement et du type de fibre, un ou plusieurs systèmes limiteurs de tension, tels que décrits en détails dans le document brevet WO2006/092514 précité, comprenant un ensemble de cylindres parallèles motorisés sur lesquels les fibres passent sans en faire le tour, peuvent être prévus entre le cantre et la tête d'application pour réduire la tension des fibres au niveau du rouleau. Un système limiteur peut être par exemple monté sur le bras poly-articulé du robot. Dans ce cas, les fibres passent dans des premiers tronçons de tube d'acheminement équipés de lame flexible et d'un tube de maintien, fixés en extrémité au cantre 3 et au système limiteur respectivement par des premiers systèmes de fixation amont et aval, puis dans des seconds tronçons de tube d'acheminement équipés de lame flexible et d'un tube de maintien, fixés en extrémité au système limiteur et à la tête de placement de fibre respectivement par des seconds systèmes de fixation amont et aval, lesdits systèmes de fixation amont et aval étant tels que décrits précédemment. Un système limiteur de tension peut être intégré en sortie du cantre et/ou en entrée de tête d'application.

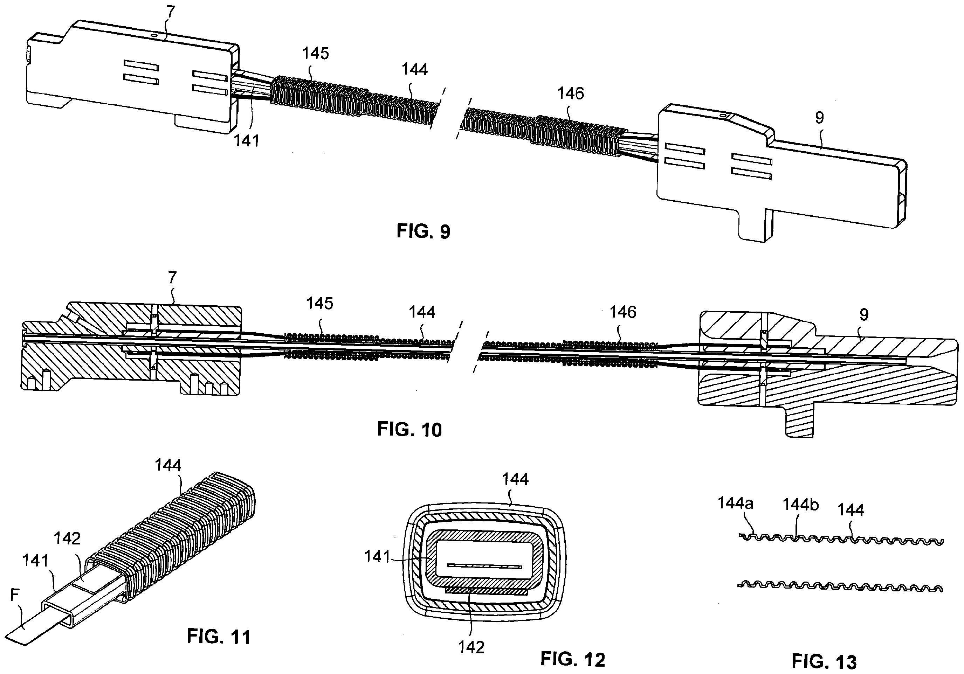

Les figures 9 à 13 illustrent des moyens d'acheminement selon une variante de réalisation, qui se différencie principalement de ceux décrit précédemment par le fait que le tube de maintien est annelé. Comme précédemment, chaque fibre est acheminée individuellement dans le passage interne d'un tube d'acheminement 141, de section rectangulaire. Chaque tube d'acheminement est équipé d'une lame flexible 142, le tube d'acheminement et la lame flexible étant placés dans un tube de maintien 144 pour les maintenir sensiblement à plat l'un contre l'autre, tout en autorisant un glissement entre eux.

La fixation de chaque tube d'acheminement est réalisée au moyen d'une cassette amont 7 et d'une cassette aval 9, telles que décrites précédemment. Le tube d'acheminement est assemblé, sans liberté de déplacement, dans le passage principal de la cassette amont, et est assemblé, avec une liberté de déplacement longitudinal dans le passage principal de la cassette aval. La lame flexible est assemblée de manière fixe, sans liberté de déplacement, dans les passages secondaires des cassettes amont et aval. Chaque cassette est en outre équipée de lames secondaires telles que décrites précédemment pour augmenter la raideur de la lame flexible en sortie de cassette.

Le tube de maintien est ici un tube flexible annelé, de section sensiblement rectangulaire. Le tube annelé 144 comporte des anneaux externes 144a en saillie vers l'extérieur du tube annelé et des anneaux internes 144b en saillie vers l'intérieur du tube annelé. Comme visible sur la figure 12, le tube de maintien autorise un léger déplacement transversal relatif de la lame flexible par rapport au tube d'acheminement, ainsi qu'un déplacement relatif en rotation de la lame par rapport au tube d'acheminement, mais limité à quelques degrés, la lame restant positionnée entre un grand côté du tube d'acheminement et un grand côté du tube de maintien.

Le tube de maintien s'étend sur la majeure partie du tube d'acheminement, son maintien en position longitudinale sur le tube d'acheminement est réalisé au moyen de deux tronçons 145, 146 de tube annelé, de section transversale plus importante. Chaque tronçon est d'un côté emmanché et éventuellement collé sur la portion d'extrémité du tube de maintien et est de l'autre côté emmanché sur les lames secondaires d'une cassette pour bloquer longitudinalement le tube de maintien et plier progressivement la lame flexible et les lames secondaires pour les amener contre le tube d'acheminement.

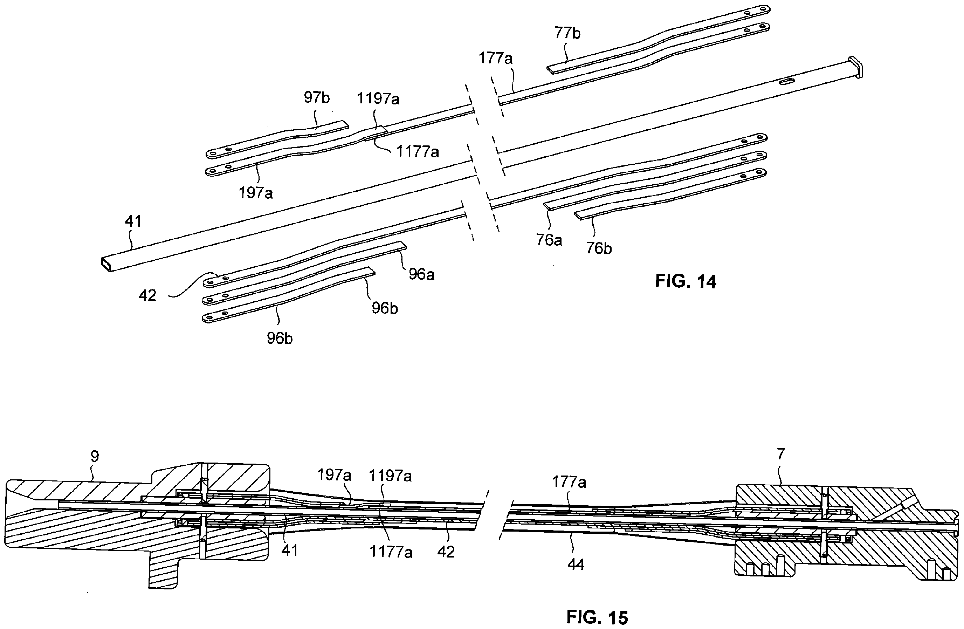

Les figures 14 et 15 illustrent des moyens d'acheminement selon une deuxième variante de réalisation, qui se différencie du mode de réalisation des figures 6 à 8 par le fait que les premières lames secondaires des cassettes amont et aval qui viennent contre le tube d'acheminement se chevauchent.

Les moyens d'acheminement comprennent comme précédemment pour chaque fibre, un tube d'acheminement 41 et une lame flexible 42, placés dans un tube de maintien 44 et montés entre une cassette amont 7 et une cassette aval 9. Des lames flexibles secondaires sont montées comme précédemment sur la cassette amont et la cassette aval, de part et d'autre du tube d'acheminement, et viennent en appui d'un côté contre le tube d'acheminement 41, et de l'autre côté contre lame flexible 42. Les premières lames secondaires 76a, 96a disposées à plat contre la lame flexible, et les deuxièmes lames secondaires 76b, 96b disposées à plat contre ces premières lames secondaires 76a, 96a sont identiques à celles de la figure 6. Par contre, la première lame secondaire 177a de la cassette amont 7 qui est en appui contre le tube d'acheminement s'étend jusqu'à la première lame secondaire 197a de la cassette aval, et sa partie d'extrémité libre 1177a vient se positionner sous la partie d'extrémité libre 1197a de la première lame secondaire 197a de la cassette aval. Ce montage permet un remplacement aisé des tubes d'acheminement 41 depuis la cassette amont 7, et évite en particulier que le tube d'acheminement ne bute contre l'extrémité libre de la première lame secondaire 197a de la cassette aval lorsqu'il est enfilé dans le tube de maintien depuis la cassette amont. Lors de flexions longitudinales du tube flexible, la partie d'extrémité la partie d'extrémité libre 1177a est apte à se déplacer longitudinalement entre la partie d'extrémité libre 1197a et le tube d'acheminement. Des deuxièmes lames secondaires 77b, 97b, identiques à celles de la figure 6, viennent en appui contre ces premières lames secondaires 177a, 197a. Ces premières lames secondaires 177a, 197a qui se chevauchent permettent bien entendu de diminuer la flexion longitudinale du tube flexible dans la direction perpendiculaire au plan de la lame sur toute sa longueur.

En variante, les tubes d'acheminement sont enfilés depuis la cassette aval de la tête d'application, la partie d'extrémité de la première lame secondaire de la cassette aval est alors placée entre le tube d'acheminement et la partie d'extrémité de la première lame secondaire de la cassette amont.

Dans une autre variante de réalisation, les premières lames secondaires des cassettes amont et aval qui viennent contre le tube d'acheminement sont remplacées par une même lame flexible qui s'étend d'une cassette à l'autre, ladite lame flexible étant fixée en extrémité à une cassette et étant apte à coulisser longitudinalement dans un passage de l'autre cassette.

## Revendications

1. Machine d'application de fibres comprenant
- une tête (2) d'application de fibres,
- des moyens (3) de stockage de fibres, et
- des moyens (4) d'acheminement des fibres desdits moyens de stockage vers la tête d'application, lesdits moyens d'acheminement comprenant des premiers tubes flexibles (41, 141) reliant les moyens de stockage à la tête d'application, chaque premier tube flexible étant apte à recevoir une fibre dans son passage interne (412), les premiers tubes flexibles étant montés en extrémité à la tête d'application et aux moyens de stockage respectivement par des systèmes de fixation (6, 8), chaque tube flexible est muni d'au moins une lame flexible (42, 142) longitudinale de section transversale rectangulaire,
**caractérisée en ce que** chaque premier tube flexible (41, 141) et sa lame flexible (42, 142) associée sont placés dans un second tube flexible (44, 144), de sorte que ledit second tube flexible maintient ladite lame flexible contre le premier tube flexible, tout en autorisant un déplacement longitudinal relatif de la lame flexible par rapport au premier tube flexible,
la lame flexible (42, 142) s'étend sur sensiblement toute la longueur du premier tube flexible (41, 141), le premier tube flexible et la lame flexible étant assemblés par leurs portions d'extrémité (42a, 42b ; 41a, 41b) auxdits systèmes de fixation (6, 8) de façon à permettre un déplacement longitudinal relatif de la lame flexible par rapport au premier tube flexible,
l'un des éléments parmi la lame flexible (42, 142) et le premier tube flexible (41, 141) est assemblé de manière fixe par ses portions d'extrémités (42a, 42b ; 41a, 41b) aux systèmes de fixation (6, 8), le second élément étant assemblé avec une liberté de déplacement longitudinal par au moins une de ses portions d'extrémité à l'un des systèmes de fixation.

2. Machine selon la revendication 1, **caractérisée en ce que** ledit second élément est assemblé par une de ses portions d'extrémité à un système de fixation avec une liberté de déplacement longitudinal, et est assemblé sans liberté de déplacement par son autre portion d'extrémité à l'autre système de fixation.

3. Machine selon la revendication 1 ou 2, **caractérisée en ce que** la lame flexible (42, 142) est assemblée sans liberté de déplacement par ses portions d'extrémité aux systèmes de fixation.

4. Machine selon la revendication 3, **caractérisée en ce que** le premier tube flexible (41, 141) est assemblé sans liberté de déplacement par une extrémité dite amont au système de fixation dit amont, assemblé aux moyens de stockage (3), et est assemblé avec une liberté de déplacement longitudinal par sa portion d'extrémité aval au système de fixation dit aval assemblé à la tête d'application.

5. Machine selon l'une des revendications 1 à 4, **caractérisée en ce que** le premier tube flexible (41, 141) présente une portion longitudinale de surface extérieure sensiblement plane, le long de laquelle la lame flexible (42, 142) est maintenue par le second tube flexible.

6. Machine selon la revendication 5, **caractérisée en ce que** le premier tube flexible (41, 141) a une section transversale sensiblement rectangulaire, la lame flexible (42, 142) étant maintenue par le second tube flexible (44, 144) le long d'un des deux côtés (411b) de grande dimension du premier tube flexible.

7. Machine selon l'une des revendications 1 à 6, **caractérisée en ce que** le second tube flexible (44, 144) a une section transversale sensiblement rectangulaire.

8. Machine selon l'une des revendications 1 à 7, **caractérisée en ce que** ladite lame flexible (42) est métallique, le premier tube flexible (41) est en matériau plastique, le second tube flexible est en matériau plastique.

9. Machine selon l'une des revendications 1 à 8, **caractérisée en ce que** le second tube flexible (44, 144) est annelé.

10. Machine selon l'une des revendications 1 à 9, **caractérisée en ce que** chaque système de fixation (6, 8) comprend un support ou cassette (7, 9) pour chaque premier tube flexible (41, 141), chaque support présentant un passage principal (73, 93) traversant dans lequel est monté le premier tube flexible par une portion d'extrémité (41a, 41b), et un passage secondaire (74a, 94a) dans lequel est monté la lame flexible (42, 142) par une portion d'extrémité (42a, 42b).

11. Machine selon l'une des revendications 1 à 10, **caractérisée en ce que** chaque système de fixation comprend des moyens de rigidification secondaires (76a, 76b, 96a, 96b, 77a, 77b, 97a, 97b ; 177a, 197a) comprenant au moins première lame flexible secondaire (77a, 97a, 177a, 197a) montée sur le système de fixation (6, 8) et venant en appui contre le premier tube flexible (41) à l'opposé de la lame flexible (42, 142).

12. Machine selon la revendication 11, **caractérisée en ce que** les premières lames secondaires (177a, 197a) des deux systèmes de fixation (6, 8) qui sont en appui contre le premier tube flexible (41) ont des parties d'extrémité libre (1177a, 1197a) qui se chevauchent, la partie d'extrémité libre (1177a) d'une première lame secondaire d'un système de fixation étant intercalée entre le premier tube flexible (41) et la partie d'extrémité libre (1197a) de la première lame secondaire de l'autre système de fixation.

13. Machine selon la revendication 11, **caractérisée en ce que** les premières lames secondaires des systèmes de fixation qui viennent contre le premier tube flexible sont formées d'une seule lame flexible continue, ladite lame étant assemblée avec une liberté de déplacement longitudinal par au moins une de ses portions d'extrémité à l'un des systèmes de fixation.

## Patentansprüche

1. Faserapplikationsmaschine, umfassend
- einen Faserapplikationskopf (2),
- Mittel (3) zum Speichern der Fasern, und
- Mittel (4) zum Befördern der Fasern von den Speichermitteln zum Applikationskopf, wobei die Fördermittel erste flexible Rohre (41, 141) umfassen, die die Speichermittel an den Applikationskopf anschließen, wobei jedes erste flexible Rohr in der Lage ist, eine Faser in seinem inneren Durchgang (412) aufzunehmen, wobei die ersten flexiblen Rohre endseitig über Befestigungssysteme (6, 8) jeweils an den Applikationskopf und an die Speichermittel montiert sind, wobei jedes flexible Rohr mit mindestens einer flexiblen Längslamelle (42, 142) von rechteckigem Querschnitt ausgestattet ist,
**dadurch gekennzeichnet, dass** jedes erste flexible Rohr (41, 141) und seine zugehörige flexible Lamelle (42, 142) in einem zweiten flexiblen Rohr (44, 144) platziert sind, derart, dass das zweite flexible Rohr die flexible Lamelle gegen das erste flexible Rohr hält, während es gleichzeitig eine relative Längsbewegung der flexiblen Lamelle in Bezug auf das erste flexible Rohr gestattet,
sich die flexible Lamelle (42, 142) auf im Wesentlichen der gesamten Länge des ersten flexiblen Rohrs (41, 141) erstreckt, wobei das erste flexible Rohr und die flexible Lamelle über ihre Endabschnitte (42a, 42b; 41a, 41b) mit den Befestigungssystemen (6, 8) verbunden sind, sodass eine relative Längsbewegung der flexiblen Lamelle in Bezug auf das erste flexible Rohr ermöglicht wird,
eines der Elemente aus der flexiblen Lamelle (42, 142) und dem ersten flexiblen Rohr (41, 141) über seine Endabschnitte (42a, 42b; 41a, 41b) in fester Weise mit den Befestigungssystemen (6, 8) verbunden ist, wobei das zweite Element über mindestens einen seiner Endabschnitte mit einer Längsbewegungsfreiheit mit einem der Befestigungssysteme verbunden ist.

2. Maschine nach Anspruch 1, **dadurch gekennzeichnet, dass** das zweite Element über einen seiner Endabschnitte mit einer Längsbewegungsfreiheit mit einem Befestigungssystem verbunden ist, und über seinen anderen Endabschnitt ohne Bewegungsfreiheit mit dem anderen Befestigungssystem verbunden ist.

3. Maschine nach Anspruch 1 oder 2, **dadurch gekennzeichnet, dass** die flexible Lamelle (42, 142) über ihre Endabschnitte ohne Bewegungsfreiheit mit den Befestigungssystemen verbunden ist.

4. Maschine nach Anspruch 3, **dadurch gekennzeichnet, dass** das erste flexible Rohr (41, 141) über ein sogenanntes stromaufwärtiges Ende ohne Bewegungsfreiheit mit dem sogenannten stromaufwärtigen Befestigungssystem verbunden ist, das mit den Speichermitteln (3) verbunden ist, und über seinen stromabwärtigen Endabschnitt mit einer Längsbewegungsfreiheit mit dem sogenannten stromabwärtigen Befestigungssystem verbunden ist, das mit dem Applikationskopf verbunden ist.

5. Maschine nach einem der Ansprüche 1 bis 4, **dadurch gekennzeichnet, dass** das erste flexible Rohr (41, 141) einen im Wesentlichen planen Außenflächen-Längsabschnitt aufweist, entlang dem die flexible Lamelle (42, 142) vom zweiten flexiblen Rohr gehalten wird.

6. Maschine nach Anspruch 5, **dadurch gekennzeichnet, dass** das erste flexible Rohr (41, 141) einen im Wesentlichen rechteckigen Querschnitt aufweist, wobei die flexible Lamelle (42, 142) vom zweiten flexiblen Rohr (44, 144) entlang einer der zwei großen Seiten (411b) des ersten flexiblen Rohrs gehalten wird.

7. Maschine nach einem der Ansprüche 1 bis 6, **dadurch gekennzeichnet, dass** das zweite flexible Rohr (44, 144) einen im Wesentlichen rechteckigen Querschnitt aufweist.

8. Maschine nach einem der Ansprüche 1 bis 7, **dadurch gekennzeichnet, dass** die flexible Lamelle (42) metallisch ist, das erste flexible Rohr (41) aus Kunststoffmaterial ist, das zweite flexible Rohr aus Kunststoffmaterial ist.

9. Maschine nach einem der Ansprüche 1 bis 8, **dadurch gekennzeichnet, dass** das zweite flexible Rohr (44, 144) gewellt ist.

10. Maschine nach einem der Ansprüche 1 bis 9, **dadurch gekennzeichnet, dass** jedes Befestigungssystem (6, 8) einen Träger oder eine Kassette (7, 9) für jedes erste flexible Rohr (41, 141) umfasst, wobei jeder Träger einen durchgehenden Hauptdurchgang (73, 93) aufweist, in dem das erste flexible Rohr über einen Endabschnitt (41a, 41b) montiert ist, und einen sekundären Durchgang (74a, 94a), in dem die flexible Lamelle (42, 142) über einen Endabschnitt (42a, 42b) montiert ist.

11. Maschine nach einem der Ansprüche 1 bis 10, **dadurch gekennzeichnet, dass** jedes Befestigungssystem sekundäre Versteifungsmittel (76a, 76b, 96a, 96b, 77a, 77b, 97a, 97b; 177a, 197a) umfasst, die mindestens erste sekundäre flexible Lamelle (77a, 97a, 177a, 197a) umfassen, welche am Befestigungssystem (6, 8) montiert ist und gegenüber der flexiblen Lamelle (42, 142) gegen das erste flexible Rohr (41) in Anlage geht.

12. Maschine nach Anspruch 11, **dadurch gekennzeichnet, dass** die ersten sekundären Lamellen (177a, 197a) der zwei Befestigungssysteme (6, 8), die gegen das erste flexible Rohr (41) anliegen, freie Endteile (1177a, 1197a) aufweisen, die sich überlappen, wobei der freie Endteil (1177a) einer ersten sekundären Lamelle eines Befestigungssystems zwischen dem ersten flexiblen Rohr (41) und dem freien Endteil (1197a) der ersten sekundären Lamelle des anderen Befestigungssystems eingefügt ist.

13. Maschine nach Anspruch 11, **dadurch gekennzeichnet, dass** die ersten sekundären Lamellen der Befestigungssysteme, die gegen das erste flexible Rohr gehen, von einer einzigen durchgängigen flexiblen Lamelle gebildet werden, wobei die Lamelle über mindestens einen ihrer Endabschnitte mit einer Längsbewegungsfreiheit mit einem der Befestigungssysteme verbunden ist.

## Claims

1. Fiber application machine comprising
- a fiber application head (2),
- fiber storing means (3), and
- means (4) for conveying the fibers from said storage means to the application head, said conveying means comprising first flexible tubes (41, 141) connecting the storage means to the application head, each first flexible tube being able to receive one fiber into its internal passage (412), the first flexible tube being mounted by end to the application head and to the storage means respectively by attachment systems (6, 8), each flexible tube is provided with at least one longitudinal flexible blade (42, 142) of rectangular cross section,
**characterized in that** each first flexible tube (41, 141) and its associated flexible blade (42, 142) are placed in a second flexible tube (44, 144) so that said second flexible tube holds said flexible blade against the first flexible tube, while allowing relative longitudinal movement of the flexible blade in relation to the first flexible tube.
the flexible blade (42, 142) extends substantially over the entire length of the first flexible tube (41, 141), the first flexible tube and the flexible blade being assembled by their end portions (42a, 42b, 41a, 41b) to said attachment systems (6, 8) so as to allow relative longitudinal movement of the flexible blade in relation to the first flexible tube,
one of the elements among the flexible blade (42, 142) and the first flexible tube (41, 141) is assembled in a fixed manner by its end portions (42a, 42b; 41a, 41b) to the attachment systems (6, 8), the second element being assembled with a freedom of longitudinal movement by at least one of its end portions to one of the attachment systems.

2. A machine according to claim 1, **characterized in that** said second element is assembled by one of its end portions to an attachment system with a freedom of longitudinal movement, and is assembled without freedom of movement by its other end portion to the other attachment system.

3. A machine according to claim 1 or 2, **characterized in that** the flexible blade (42, 142) is assembled without freedom of movement of its end portions to the attachment systems.

4. A machine according to claim 3, **characterized in that** the first flexible tube (41, 141) is assembled without freedom of movement by a so called upstream end to the so called upstream attachment system, assembled to the storage means (3), and is assembled with a freedom of longitudinal movement by its downstream end portion to the so called downstream attachment system assembled to the application head.

5. A machine according to one of claims 1 to 4, **characterized in that** the first flexible tube (41, 141) has a longitudinal outer surface portion substantially flat, along which the flexible blade (42, 142) is held by the second flexible tube.

6. A machine according to claim 5, **characterized in that** the first flexible tube (41, 141) has a substantially rectangular cross section, the flexible blade (42, 142) being held by the second flexible tube (44, 144) along one of the two large sides (411b) of the first flexible tube.

7. A machine according to one of claims 1 to 6, **characterized in that** the second flexible tube (44, 144) has a substantially rectangular cross section.

8. A machine according to one of claims 1 to 7, **characterized in that** said flexible blade (42) is metallic, the first flexible tube (41) is of plastic material, the second flexible tube is of plastic material.

9. A machine according to one of claims 1 to 8, **characterized in that** the second flexible tube (44, 144) is corrugated.

10. A machine according to one of claims 1 to 9, **characterized in that** each attachment system (6, 8) comprises a support or cassette for each first flexible tube (41, 141), each support having a main through passage (73, 93) in which is mounted the first flexible tube by an end portion (41a, 41b), and a secondary passage (74a, 94a) in which is mounted the flexible blade (42, 142) by an end portion (42a, 42b).

11. A machine according to one of claims 1 to 10, **characterized in that** each attachment system comprises secondary rigidifying means (76a, 76b, 96a, 96b, 77a, 77b, 97a, 97b, 177a, 197a) comprising at least first secondary flexible blade (77a, 97a, 177a, 197a) mounted on the attachment system (6, 8) and in abutment against the first flexible tube (41) opposite to the flexible blade (42, 142).

12. A machine according to claim 11, **characterized in that** the first secondary blades (177a, 197a) of the two attachment systems (6, 8) which abut against the first flexible tube (41) have free end portions (1177a, 1197a) which overlap, the free end portion (1777a) of a first secondary blade of an attachment system being interposed between the first flexible tube (41) and the free end portion (1197a) of the first secondary blade of the other attachment system.

13. A machine according to claim 11, **characterized in that** the first secondary blades of the attachment systems that come against the first flexible tube are formed from a single continuous flexible blade, said blade being connected with freedom of longitudinal movement by at least one of its end portions to one of the attachment systems.
